# EUROPÄISCHE PATENTSCHRIFT

(11) **EP 0 802 132 B1**
(45) Veröffentlichungstag und Bekanntmachung des Hinweises auf die Patenterteilung: **12.06.2002**
(21) Anmeldenummer: 97104989.5
(22) Anmeldetag: 25.03.1997
(51) Int. Cl.: B65G 47/61

(54) **Fördertasche für einen Hängeförderer**
Conveyor hook for a suspended conveyor
Crochet de transport pour convoyeur suspendu

(30) Priorität: 16.04.1996 DE 19614905
(43) Veröffentlichungstag der Anmeldung: 22.10.1997
(73) Patentinhaber: DÜRKOPP ADLER AKTIENGESELLSCHAFT, D-33719 Bielefeld (DE)
(72) Erfinder: Schneuing, Ralf, 33803 Steinhagen (DE)
(74) Vertreter: Rehmann, Klaus-Thorsten, Dipl.-Ing.

(56) Entgegenhaltungen:
- EP-A- 0 376 382
- DE-A- 3 834 576
- DE-C- 4 324 426

## Beschreibung

Die Erfindung betrifft eine Fördertasche für eine Hängeförderanlage gemäß dem Oberbegriff des Anspruchs 1 und ein Verfahren zum Eingeben eines mit einem hakenförmigen Kopfbereich versehenen Trägers gemäß dem Oberbegriff des Anspruchs 10.

Eine gattungsgemäße Fördertasche offenbaren die EP-A-0 307 045 und die EP-A-0 376 382. Diese Fördertasche ist insbesondere zum Fördern von auf Kleiderbügel hängenden Kleidungsstücken konzipiert. Während des Transports ruht der Bügelhaken auf der Klinke. Damit der Bügel nicht aus der Fördertasche herausfallen kann, ist diese durch eine Zunge verschließbar. Diese Zunge ist gegen die Transportrichtung schwenkbar ausgebildet, so daß der Bügelhaken von vorn durch Wegschwenken der Verschlußklinke in den Aufnahmebereich der Fördertasche eingebbar ist. In Transportrichtung ist die Klinke gesperrt,
so daß ein Herausfallen des Bügels bzw. Bügelhakens aus der Fördertasche während des Transports ausgeschlossen ist. Zum Abgeben des Bügels aus der Fördertasche wird die Klinke, auf der der Bügelhaken während des Transports ruht entgegen die Transportrichtung weggeschwenkt, wobei der Bügelhaken durch den Schenkel des Grundkörpers der Fördertasche abgestreift wird und dann aus der Fördertasche heraus auf eine seitlich neben dem Förderstrang angeordnete Ausgleisstange abrutscht. Damit die Klinke nicht durch die Last des auf ihr ruhenden Hakens während des Transports öffnet ist im Grundkörper eine Schließfeder vorgesehen, die die Klinke in ihrer geschlossenen Stellung hält.

Problematisch daran ist, daß der Bügel beim Abstreifen in der Fördertasche eine negative Beschleunigung erfährt. Damit er sicher aus dem Abgabebereich herausgelangt, muß folglich die Ausgleisstange ein entsprechend großes Gefälle haben, was aus räumlichen Gründen nicht immer einfach zu realisieren ist. Außerdem muß die Schließfeder auf die maximal zu transportierende Last ausgerichtet sein. Entsprechend hohe Öffnungskräfte sind notwendig. Läßt die Federkraft im Laufe der Betriebszeit nach, können gerade schwere Kleidungsstücke dann nicht mehr sicher gefördert werden. Durch die Vielzahl der Bauteile ist die bekannte Fördertasche außerdem recht kompliziert herstellbar. Ein automatisiertes Beladen der Fördertasche ist nicht oder nur mit äußerst komplizierten Abläufen möglich.

Die DE-C-43 24 426 offenbart eine Fördertasche für einen Hängeförderer zur Aufnahme eines einzigen Kleiderbügelhakens, die aus einem rahmenförmigen Grundkörper und einer hierin gegen die Transportrichtung der Fördertasche öffnenden Klinke besteht. Diese Fördertasche ist passiv und kann nicht selbst einen Kleiderbügelhaken ergreifen, sondern die Bügel müssen in die Tasche von außen eingegeben werden. Auf einer schiefen Ebene im hinteren Bereich der Fördertasche liegt der Bügelhaken während des Transports an der die Fördertasche verschließenden Klinke an. Bewegt sich die Klinke zum Auswurf des Bügelhakens entgegen der Förderrichtung wird der an ihr anliegende Bügelhaken auf der schiefen Ebene zunächst in Transportrichtung nach oben geschoben, bevor er dann infolge der Gravitationskraft in die entgegengesetzte Richtung auf der Ebene herabrutscht und aus der Fördertasche herausfällt.

Die DE-A-38 34 576 offenbart eine Fördertasche für einen Hängeförderer zur Aufnahme eines einzigen Kleiderbügelhakens, bei der sich die Klinke gegen die Transportrichtung öffnet und den auf ihr aufliegenden Bügelhaken dadurch abstreift, daß dieser gegen eine Anlaufkante in der Fördertasche angeschoben wird. Bis der Bügelhaken aus der Fördertasche herausfällt muß er eine negative Beschleunigung erfahren.

Von dieser Problemstellung ausgehend soll eine gattungsgemäße Fördertasche verbessert werden. Insbesondere soll durch die Verbesserung auch eine automatische Beladung einfach möglich werden.

Zur Problemlösung zeichnet sich die gattungsgemäße Fördertasche dadurch aus, daß die Schwenkachse der Klinke in Transportrichtung hinter dem Auflagepunkt des Hakens auf der Klinke liegt und die Öffnungsbewegung der Klinke in Transportrichtung erfolgt.

Durch das Öffnen der Fördertasche in Fahrtrichtung zeigt die Öffnung der Klinke in Fahrtrichtung gesehen nach hinten. Dadurch tritt beim Öffnen der Fördertasche auf den einhängenden Bügelhaken keine Negativbeschleunigung bei der Abgabe auf. Es ist folglich auch nicht mehr notwendig, das abgegebene Teil wieder in Fahrt zu bringen, wodurch das Abrutschgefälle der Ausgleisstange entsprechend gering ausgeführt werden kann.

Außerdem wird die Schließkraft der Klinke durch den aufliegenden Bügelhaken erhöht, so daß keine zusätzlichen Federkräfte notwendig sind, um die Fördertasche zu verschließen.

Weil keine Federkräfte zum Öffnen der Fördertasche zu überwinden sind, kann der Bügelhaken einfach von unten in den Aufnahmebereich der Fördertasche eingegeben werden, wobei nur geringe Kräfte notwendig sind, die senkrecht von unten auf die Klinke einwirken müssen, damit diese verschwenkt wird. Hierzu liegt die Schwenkachse der Klinke in horizontaler Richtung außerhalb des Aufnahmebereichs der Fördertasche. Damit wird immer durch Krafteinwirkung von unten auf die Klinke ein Öffnungsmoment ausgeübt.

Vorzugsweise liegt die Schwenkachse in Transportrichtung hinter dem Schwerpunkt der Klinke, so daß diese allein durch ihr Eigengewicht immer in die Schließstellung zurückfällt.

Insbesondere vorteilhaft ist es, wenn der Grundkörper im Aufnahmebereich des Hakens U-förmig ausgebildet ist und seine beiden Schenkel senkrecht nach unten ragen. Wenn der in Transportrichtung hintere Schenkel länger ausgebildet ist als der vordere, kann an ihm ein Ausschiebebereich vorgesehen werden und es kann der Bügelhaken von diesem zur Aufnahme und Abgabe geschoben werden, so daß ihm die entsprechende Beschleunigung aus der Förderanlage selbst zuteil wird.

Insbesondere vorteilhaft ist es, wenn die Klinke in ihrer geschlossenen Stellung in eine am in Transportrichtung hinteren Schenkel des Grundkörpers vorgesehene Ausnehmung eingreift. Dadurch ist ein sicheres Verschließen der Fördertasche gewährleistet, wobei der Aufnahmebereich dann rundum verschlossen ist.

Außerdem vorteilhaft ist es, wenn die Schenkel des Grundkörpers so geschlitzt sind, daß in ihnen die Klinke anordnenbar ist.

Der Fortsatz zur Einleitung der Öffnungsbewegung der Fördertasche ragt vorzugsweise nach oben aus dem Grundkörper heraus. Dadurch ist es möglich, zum Öffnen der Fördertasche im Abgabebereich einen magnetisch oder pneumatisch angesteuerten Bolzen vorzusehen, der im Bedarfsfalle in den Transportweg einfährt und gegen den der Fortsatz der Klinke dann anläuft, so daß die Klinke beim Weitertransport der Fördertasche aufgezogen wird.

Um eine definierte Schließstellung der Klinke zu gewährleisten, liegt diese bei einer vorteilhaften Ausführungsform der Fördertasche in ihrer geschlossenen Stellung an einem den im in Transportrichtung vorderen Schenkel vorgesehenen Schlitz verschließenden Anschlag an.

Eine besonders einfach Herstellung ist dann möglich, wenn der Grundkörper aus Kunststoff und die Klinke aus Metall ausgebildet ist. Durch den verwendeten Kunststoff ist die Fördertasche entsprechend leicht, so daß die für die Förderanlage notwendigen Antriebskräfte reduziert werden können, während die metallische Klinke als das dem Verschleiß unterliegende Teil entsprechend widerstandsfähig ausgebildet ist.

Oberhalb des Grundkörpers im Einhängebereich für die Hängeförderanlage ist die Fördertasche so ausgebildet, daß sie in bestehende Anlagen integriert werden kann, und dadurch beispielsweise gegen die in der DE-C1-39 09 002 beschriebene Fördertasche ausgetauscht werden kann.

Zur selbsttätigen Beladung der Fördertasche zeichnet sich ein Verfahren zum Eingeben eines mit einem hakenförmigen Kopfbereich versehenen Trägers, insbesondere eines Kleiderbügels in die Fördertasche innerhalb des endlos umlaufenden Hängeförderers durch folgende Schritte aus:
- eine Übergabeschiene verläuft so dicht unterhalb der Fördertasche, daß ein auf der Übergabeschiene ruhender Träger von der Fördertasche im Kopfbereich ergriffen und in Transportrichtung geschoben wird,
- die Fördertasche schiebt den Träger bis in einen in Transportrichtung ansteigenden Bereich der Übergabeschiene,
- im Verlauf der Steigung gelangt der hakenförmige Kopfbereich des Trägers senkrecht von unten in den Aufnahmebereich der Fördertasche hinein, wobei der Aufnahmebereich dabei vom Kopfbereich des Trägers geöffnet wird,
- wenn sich der Kopfbereich vollständig im Aufnahmebereich befindet, wird dieser unter Gravitationseinfluß wieder geschlossen, und
- nachdem die Übergabeschiene in einen in Transportrichtung abfallenden Bereich übergeht, fällt der Träger in die Fördertasche und wird dann in ihr hängend weiter transportiert.

Anhand eines Ausführungsbeispieles soll die Erfindung nachfolgend näher beschrieben werden. Es zeigt:

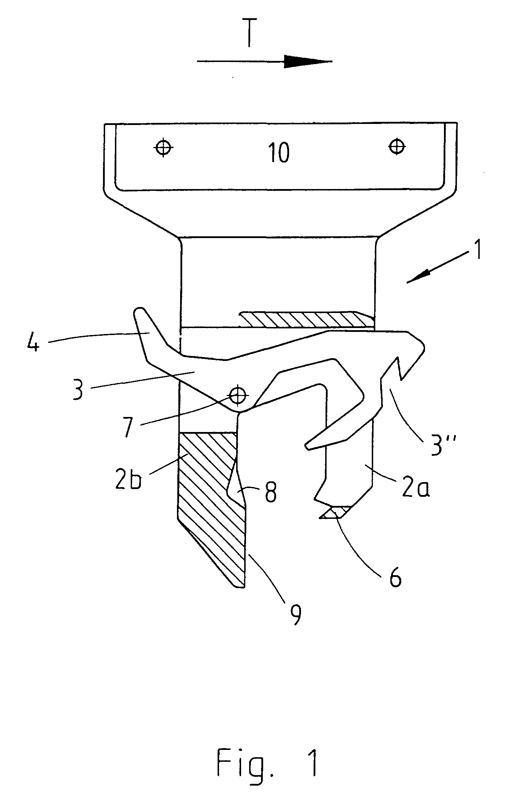

- Figur 1 -: eine erfindungsgemäße Fördertasche im Teilschnitt mit geöffneter Klinke,

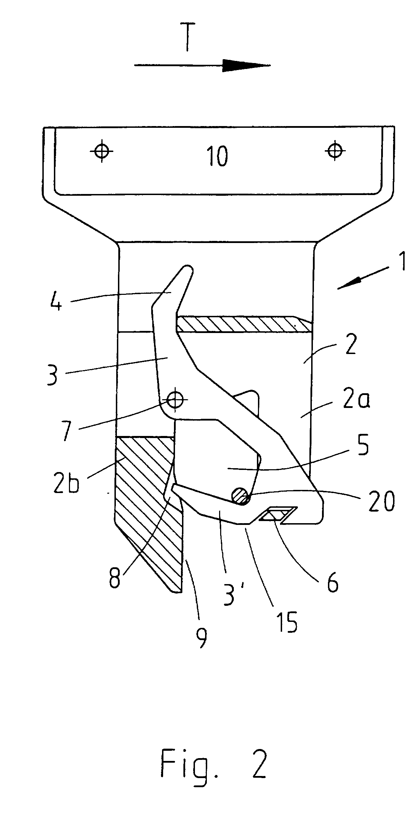

- Figur 2 -: die Fördertasche nach Figur 1 mit geschlossener Klinke,
- Figuren 3a bis 3f -: den Ablauf des selbsttätigen Eingebens eines Bügelhakens in die Fördertasche,

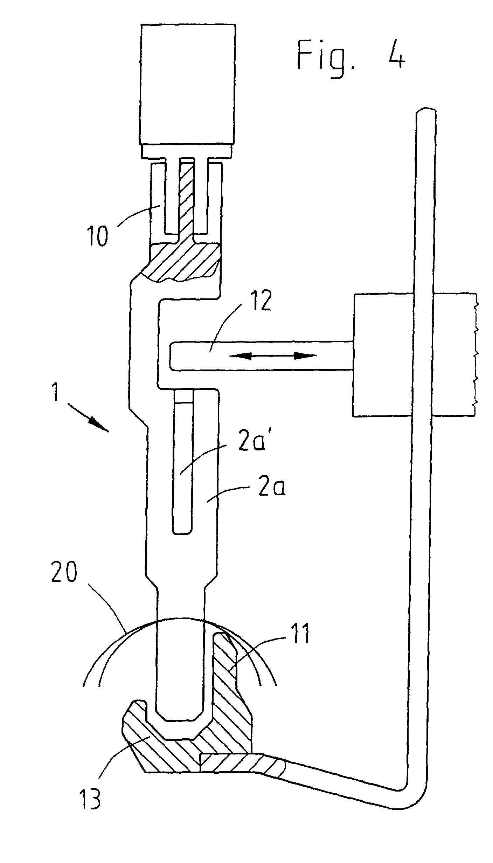

- Figur 4 -: die schematische Darstellung einer sich in der Abgabestation befindenden Fördertasche.

Die Fördertasche 1 besteht im wesentlichen aus zwei Teilen, dem aus Kunststoff gefertigten Grundkörper 2 und der metallischen Klinke 3. Oberhalb des Grundkörpers 2 ist an diesem einstückig ein Eingabebereich 10 vorgesehen, mit dem die einzelnen Fördertaschen 1 in entsprechender Anzahl mit der Förderkette eines Hängeförderers verbunden werden können.

Der Grundkörper 2 ist U-förmig ausgebildet und seine beiden Schenkel 2a, 2b weisen senkrecht nach unten, so daß sich zwischen ihnen ein Aufnahmebereich 5 ausbildet. Der in Transportrichtung T hintere Schenkel 2b des Grundkörpers 2 ist länger ausgebildet als der vordere Schenkel 2a. Der Grundkörper 2 ist so geschlitzt, daß die Klinke 3 in ihm untergebracht werden kann. Die Klinke 3 hat eine im wesentlichen stiefelförmige Form und ihr Fuß 3' dient zur Aufnahme des Bügelhakens 20. In geschlossener Stellung der Klinke 3 steigt die dem Aufnahmebereich 5 zugewandte Seite des Fußes 3' entgegen der Transportrichtung leicht an. Durch diese Ausbildung wird sichergestellt, daß der Bügelhaken 20 immer in die vordere Position gleitet. Über einen Bolzen ist die Klinke 3 in einer entsprechenden Bohrung im Grundkörper 2 schwenkbar mit dem Grundkörper verbunden, so daß sich in Bolzenmitte die Schwenkachse 7 ausbildet, die außerhalb des Aufnahmebereichs 5 liegt. Im Ausführungsbeispiels befindet sie sich in einer vertikalen Ebene mit dem in Transportrichtung hinteren Ende des Aufnahmebereichs 5.

Im hinteren Schenkel 2b des Grundkörpers 2 ist eine Ausnehmung 8 vorgesehen in die der Fuß 3' der Klinke 3 in geschlossenem Zustand der Fördertasche 1 eingreift. Eine in Transportrichtung gesehen vor dem Fuß 3' vorgesehene Ausnehmung 3'' in der Klinke 3 liegt im geschlossenen Zustand an einem Anschlag 6 an, der den Schlitz 2a' im Schenkel 2a des Grundkörpers 2 nach unten verschließt.

Im oberen Bereich ist die Klinke 3 mit einem Fortsatz 4 versehen, der aus dem Grundkörper 2 nach oben herausragt. Soll ein in der Fördertasche 1 aufgenommener Bügelhaken 20 abgegeben werden, schwenkt in der Abgabestation 13 kurz vor der Fördertasche ein ebenfalls magnetisch betätigter Auslösehebel 12 in den Taschenbereich. Die Klinke 3 öffnet dann in Transportrichtung T, das heißt die Öffnung weist nach hinten und der Bügel 20 wird auf einen in der Abgabestation 13 angebrachten Steg 11 abgelegt. Die Oberkante des Steges 11 befindet sich auf Höhe des höchsten Punktes des Innenradius des Bügelhakens 20. Hierdurch ist ein ruhiges Ablegen auch problematischer Teile, beispielsweise beim Beuteltransport, wo der Schwerpunkt sehr hoch liegt und daraus Pendelbewegungen resultieren, gewährleistet. Der Schenkel 2b ist dabei so weit nach unten verlängert, daß an ihm ein Ausschiebebereich 9 ausgebildet ist, der den Bügel 20 mit der Fördergeschwindigkeit des Förderers in den Gefällebogen der Abgabestation 13 fördert. Dadurch kann ein extrem geringes Abrutschgefälle im weiteren Verlauf realisiert werden, da keine erneute Beschleunigung des Bügelhakens 20 notwendig ist.

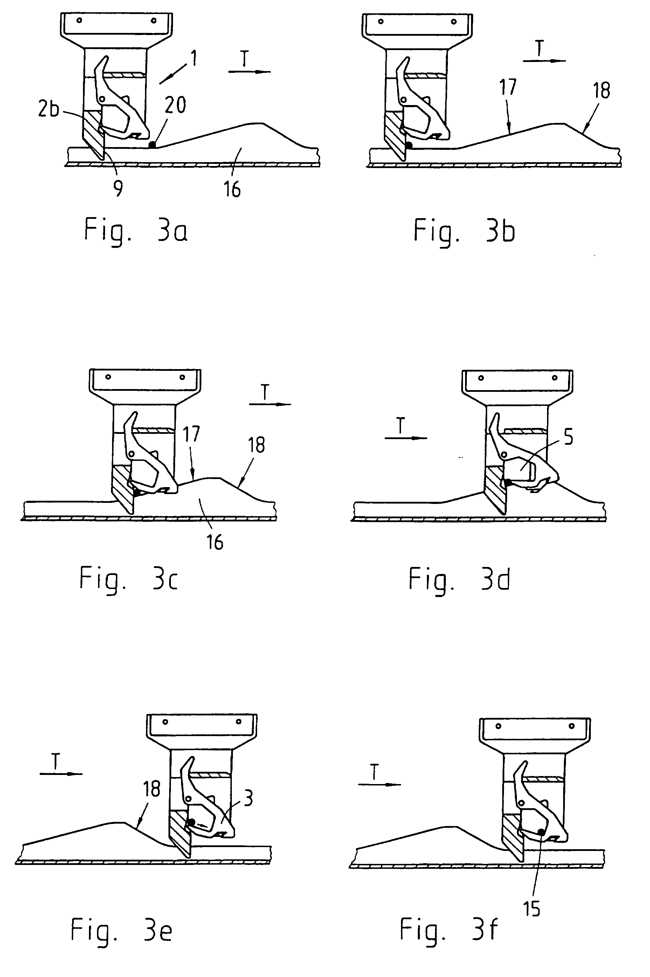

Anhand der Figuren 3a bis 3f soll nachfolgend das automatische Eingeben eines Bügelhakens 20 in die Fördertasche 1 erläutert werden. Unterhalb der Fördertasche 1 verläuft in der Aufgabestation eine Übergabeschiene 16 mit einem in Transportrichtung T ansteigenden Bereich 17 und einem sich hieran anschließenden, wieder abfallenden Bereich 18. Der Bügelhaken 20 ruht auf der Übergabeschiene 16. Der Schenkel 2b der Fördertasche 1 ragt seitlich an der Übergabeschiene 16 nach unten hervor. Die entlang der Übergabeschiene 16 geförderte Fördertasche 1 ergreift mit dem Ausschiebebereich 9 des Schenkels 2b den Bügelhaken 20 und schiebt diesen in Transportrichtung T vor (Figur 3b). Beim Erreichen des ansteigenden Bereichs 17 wird der Bügelhaken 20 angehoben und trifft senkrecht von unten gegen den Fuß 3' der Klinke 3, die dadurch in Transportrichtung öffnet, wodurch der Bügelhaken 20 in den Aufnahmebereich 5 der Fördertasche 1 gelangt. Im weiteren Verlauf des ansteigenden Bereichs 17 kommt der Bügelhaken 20 völlig außer Eingriff mit dem Fuß 3' der Klinke 3, so daß diese aufgrund der Schwerkraft wieder in ihre Schließstellung zurückfällt. Wird der abfallende Bereich 18 der Übergabeschiene 16 erreicht, rutscht der Bügelhaken 20 auf den Fuß 3' der Klinke 3, auf dem er dann entlang der Schräge in die vordere Transportstellung gleitet (Figur 3f).

### Bezugszeichenliste

- 1: Fördertasche
- 2: Grundkörper
- 2a: Schenkel
- 2b: Schenkel
- 2a': Schlitz
- 3: Klinke
- 3': Klinkenfuß
- 3'': Ausnehmung
- 4: Fortsatz
- 5: Aufnahmebereich
- 6: Anschlag
- 7: Schwenkachse
- 8: Ausnehmung
- 9: Ausschiebebereich
- 10: Einhängebereich
- 11: Steg
- 12: Auslösehebel
- 13: Abgabestation
- 16: Übergabeschiene
- 17: ansteigender Bereich
- 18: abfallender Bereich
- 20: Haken

## Patentansprüche

1. Fördertasche für eine Hängeförderanlage, insbesondere zum Transport von auf Trägern hängendem Fördergut, mit einer jeweils zum Tragen nur eines Trägers an seinem hakenförmigen Kopfbereich (Haken 20) vorgesehenen, in einem Grundkörper (2) schwenkbar angeordneten Klinke (3), die einen aus dem Grundkörper (2) herausragenden Fortsatz (4) zum Verschwenken der Klinke (3) und dadurch Öffnen der Fördertasche (1) aufweist, wobei der Haken (20) zumindest bei horizontalem Transport auf der Klinke (3) aufliegt, **dadurch gekennzeichnet, daß** die Schwenkachse (7) der Klinke (3) in Transportrichtung (T) hinter dem Auflagepunkt (15) des Hakens (20) auf der Klinke (3) liegt und die Öffnungsbewegung der Klinke (3) in Transportrichtung (T) erfolgt.

2. Fördertasche nach Anspruch 1, **dadurch gekennzeichnet, daß** die Schwenkachse (7) in Transportrichtung (T) hinter dem Schwerpunkt der Klinke (3) liegt.

3. Fördertasche nach Anspruch 1, **dadurch gekennzeichnet, daß** der Grundkörper (2) im Aufnahmebereich (5) für den Haken (20) U-förmig ausgebildet ist und seine beiden Schenkel (2a, 2b) senkrecht nach unten ragen.

4. Fördertasche nach Anspruch 3, **dadurch gekennzeichnet, daß** an dem in Transportrichtung (T) hinteren Schenkel (2b) ein weiter nach unten fortgeführter Ausschiebebereich (9) zur Einwirkung auf einen nicht in der Fördertasche befindlichen Haken (20) vorgesehen ist.

5. Fördertasche nach einem oder mehreren der vorstehenden Ansprüche, **dadurch gekennzeichnet, daß** die Klinke (3) in ihrer geschlossenen Stellung in eine am in Transportrichtung (T) hinteren Schenkel (2b) des Grundkörpers (2) vorgesehene Ausnehmung (8) eingreift.

6. Fördertasche nach Anspruch 3, **dadurch gekennzeichnet, daß** die Schenkel (2a, 2b) des Grundkörpers (2) so geschlitzt sind, daß in ihnen die Klinke (3) anordnenbar ist.

7. Fördertasche nach Anspruch 1, **dadurch gekennzeichnet, daß** der Fortsatz (4) nach oben aus dem Grundkörper (2) herausragt.

8. Fördertasche nach einem oder mehreren der vorstehenden Ansprüche, **dadurch gekennzeichnet, daß** die Klinke (3) in ihrer gechlossenen Stellung an einem den im in Transportrichtung (T) vorderen Schenkel (2a) vorgesehenen Schlitz (2a') verschließenden Anschlag (6) anliegt.

9. Fördertasche nach einem oder mehreren der vorstehenden Ansprüche, **dadurch gekennzeichnet, daß** der Grundkörper (2) aus Kunststoff und die Klinke (3) aus Metall ausgebildet ist.

10. Verfahren zum Eingeben eines mit einem hakenförmigen Kopfbereich (20) versehenen Trägers, insbesondere eines Kleiderbügels in eine Fördertasche (1) innerhalb eines endlos umlaufenden Hängeförderers, **gekennzeichnet durch** folgende Schritte:
- eine Übergabeschiene (16) verläuft so dicht unterhalb der Fördertasche (1), daß ein auf der Übergabeschiene (16) ruhender Träger von der Fördertasche (1) im Kopfbereich (20) ergriffen und in Transportrichtung (T) geschoben wird,
- die Fördertasche (1) schiebt den Träger bis in einen in Transportrichtung (T) ansteigenden Bereich (17) der Übergabeschiene (16),
- im Verlauf der Steigung (17) gelangt der hakenförmige Kopfbereich (20) des Trägers senkrecht von unten in den Aufnahmebereich (5) der Fördertasche (1) hinein, wobei der Aufnahmebereich (5) dabei vom Kopfbereich (20) des Trägers geöffnet wird,
- wenn sich der Kopfbereich (20) vollständig im Aufnahmebereich (5) befindet, wird dieser unter Gravitationseinfluß wieder geschlossen, und
- nachdem die Übergabeschiene in einen in Transportrichtung (T) abfallenden Bereich übergeht, fällt der Träger in die Fördertasche (1) und wird dann in ihr hängend weiter transportiert.

## Claims

1. A conveyor pocket for a suspended conveyor, more especially for conveying articles hanging on carriers, comprising a catch (3) for holding the hooked head region (hook 20) of only one carrier, the catch (3) being pivotably mounted in a base member (2) and having a projection (4) extending from the base member (2) for pivoting the catch (3) and thus opening the conveyor pocket (1), wherein the hook (20) rests on the carrier (3) at least when conveyed horizontally, **characterised in that** the pivot axis (7) of the catch (3) is situated in the conveying direction (T) behind the place (15) where the hook (20) rests on the catch (3), and the hook (3) opens in the conveying direction (T).

2. A conveyor pocket according to claim 1, **characterised in that** the pivot axis (7) is situated in the conveying direction (T) behind the centre of gravity of the catch (3).

3. A conveyor pocket according to claim 1, **characterised in that** the base member (2) is U-shaped in the region (5) for receiving the hook (20), and its two limbs (2a, 2b) extend vertically downwards.

4. A conveyor pocket according to claim 3, **characterised in that** an additional downward ejection region (9) is provided on the rear limb (2b) in the conveying direction (T) for acting on a hook (20) not situated in the conveyor pocket.

5. A conveyor pocket according to one or more of the preceding claims, **characterised in that** in the closed position, the catch (3) engages in a recess (8) provided on the rear limb (2b) of the base member (2) in the conveying direction (T).

6. A conveyor pocket according to claim 3, **characterised in that** the limbs (2a, 2b) of the base member (2) are slotted so that the catch (3) can be disposed in them.

7. A conveyor pocket according to claim 1, **characterised in that** the extension (4) projects upwards from the base member (2).

8. A conveyor pocket according to one or more of the preceding claims, **characterised in that** in the closed position, the catch (3) abuts a stop (6) closing the slot (2a') on the front limb (2a) in the conveying direction (T).

9. A conveyor pocket according to one or more of the preceding claims, **characterised in that** the base member (2) is plastic and the catch (3) is metal.

10. A method of inserting a carrier, especially a clothes hook, formed with a hooked head region (20) into a conveyor pocket (1) in an endless rotating suspended conveyor, **characterised by** the following steps:
- a delivery rail (16) extends sufficiently closely underneath the conveyor pocket (1) for the head region (20) of a carrier resting on the delivery rail (16) to be gripped by the conveyor pocket (1) and pushed in the conveying direction (T),
- the conveyor pocket (1) pushes the carrier into a region (17) of the delivery rail (16) which rises in the conveying direction (T),
- during the rise (17), the hooked head region (20) of the carrier arrives vertically from below into the receiving region (5) of the conveyor pocket (1), when the receiving region (5) is opened by the head region (20) of the carrier,
- when the head region (20) is fully in the receiving region (5), the said region is re-closed by gravity, and
- after the delivery rail merges into a region which slopes downwards in the conveying direction (T), the carrier falls into the conveyor pocket (1) and is conveyed suspended therein.

## Revendications

1. Réceptacle de convoyage pour convoyeur suspendu, en particulier pour le transport d'une charge suspendue sur des supports, comprenant un loquet (3) monté basculant dans un corps de base (2) et prévu pour transporter à chaque fois un seul support par la zone de tête en forme de crochet (crochet 20) de ce support, le loquet (3) comprenant un prolongement (4) faisant saillie hors du corps de base (2) pour faire basculer le loquet (3) et ainsi ouvrir le réceptacle de convoyage, le crochet (20) reposant sur le loquet (3) au moins lors d'un transport horizontal, **caractérisé en ce que** l'axe de basculement (7) du loquet (3) se situe en arrière du point d'appui (15) du crochet (20) sur le loquet (3) relativement à la direction de transport (T), et **en ce que** le mouvement d'ouverture du loquet s'effectue selon la direction de transport (T).

2. Réceptacle de convoyage selon la revendication 1, **caractérisé en ce que** l'axe de basculement (7) est disposé en arrière du centre de gravité du loquet (7) relativement à la direction de transport (T).

3. Réceptacle de convoyage selon la revendication 1, **caractérisé en ce que** dans la zone de réception (5) pour le crochet (20) le corps de base (2) est réalisé en forme de U et ses deux branches (2a,2b) s'étendent verticalement vers le bas.

4. Réceptacle de convoyage selon la revendication 3, **caractérisé en ce qu'**il est prévu sur la branche (2b) située en arrière relativement à la direction de transport (T) une zone d'expulsion (9) se prolongeant plus loin vers le bas pour agir sur un crochet (20) qui n'est pas dans le réceptacle de convoyage.

5. Réceptacle de convoyage selon l'une ou plusieurs des revendications précédentes, **caractérisé en ce que** dans sa position fermée, le loquet (3) est engagé dans un évidement (8) prévu dans la branche (2b) du corps de base (2) située en arrière relativement à la direction de transport (T).

6. Réceptacle de convoyage selon la revendication 3, **caractérisé en ce que** les branches (2a,2b) du corps de base (2) sont fendues de sorte que le loquet (3) puisse être disposé dans les branches.

7. Réceptacle de convoyage selon la revendication 1, **caractérisé en ce que** le prolongement (4) fait saillie vers le haut hors du corps de base (2).

8. Réceptacle de convoyage selon l'une ou plusieurs des revendications précédentes, **caractérisé en ce que** dans sa position fermée, le loquet (3) repose contre une butée (6) fermant la fente (2a') prévue dans la branche (2a) située en avant relativement à la direction de transport (T).

9. Réceptacle de convoyage selon l'une ou plusieurs des revendications précédentes, **caractérisé en ce que** le corps de base (2) est en plastique et que le loquet (3) est en métal.

10. Procédé pour introduire un support prévu avec une zone de tête en forme de crochet (20), en particulier un cintre à vêtements, dans un réceptacle de convoyage (1) dans un convoyeur suspendu tournant sans fin, **caractérisé par** les étapes suivantes:
- un rail de transfert (16) s'étend sous le réceptacle de convoyage (1) avec une proximité telle qu'un support reposant sur le rail de transfert (16) soit saisi au niveau de la zone de tête (20) par le réceptacle de convoyage (1) et poussé dans la direction de transport (T);
- le réceptacle de convoyage (1) pousse le support jusqu'à une zone montante (17), relativement à la direction de transport (T), du rail de transfert (16);
- le long de la zone montante (17), la zone de tête en forme de crochet (20) du support pénètre verticalement de bas en haut dans la zone de réception (5) du réceptacle de convoyage (1), laquelle est alors ouverte par la zone de tête (20) du support;
- lorsque la zone de tête (20) est entièrement située dans la zone de réception (5) celle-ci est refermée sous l'action de la gravité; et
- après que le rail de transfert se transforme en une zone descendante relativement à la direction de transport (T), le support tombe dans le réceptacle de convoyage (1) puis est transporté suspendu dans celui-ci.
